# EUROPEAN PATENT APPLICATION

(11) **EP 1 760 922 A1**
(43) Date of publication of application: **07.03.2007**
(21) Application number: 06254443.2
(22) Date of filing: 25.08.2006
(51) Int. Cl.: H04J 3/16, H04L 12/28, H04L 12/56, H04L 29/06

(54) **Flexible data partitioning in systems using wideband channel bonding modems**

(30) Priority: 02.09.2005 GB 0517843
(71) Applicant: Pace Micro Technology PLC, Saltaire, Shipley, BD14 3LF (GB)
(72) Inventor: Beales, Stephen, Saltaire Shipley, BD18 3LF (GB)
(74) Representative: Wood, Graham

(57) **Abstract**

The invention relates to the improved utilisation of modems for data communication and particularly, although not necessarily exclusively, related to the use of wideband modems. The invention relates to a method for allocating groups of channels to users or groups of users in an improved manner such that at least one of the channels in a group of channels is available to both a first user or group of users and a second user or groups of users. This is in contrast to the conventional method where typically a group of channels is only available to one user or group of users. This invention provides large advantages over the conventional method for communications and increases the capacity for burst rate data communication via the modem.

## Description

The invention to which this application relates is the improved utilisation of modems for data communication and particularly, although not necessarily exclusively, related to the use of wideband modems.

Wideband modems are known to offer the ability to deliver very high bandwidth for data transmission and communication to individual users. However it is known that significant spectral contention still exists in most networks, such as cable based networks on which digital data relating to a range of services such as television channels, internet and the like can be carried.

In previous systems, when there are many clients or users sharing the spectral capacity of a cable data transmission network, groups of users are conventionally allocated a portion of the available spectrum and data for each user within the group of users is time division multiplexed amongst that group.

It is known that wideband channel bonding modems can be used in exactly the same way and are known to provide higher data transfer rates than if the time division multiplexing was not performed. However a disadvantage of the use of time division multiplexing with the wideband channel bonding modems is the lack of flexibility. This means that the time division multiplexing of the data is limited to the users that are grouped together having to share the group of bonded channels of the modem.

The aim of the present invention is to provide greater flexibility to the users of the wideband bonded modems and thereby provide increased benefit to the users.

In a first aspect of the invention there is provided a method for processing and allocating received data, said received data transferred via a modem amongst an identifiable number of users connected to said modem, allocating portions of the available data transmission spectrum to respective users or groups of users and wherein, the modem is a bonded channel modem and spectrally adjacent data channels of the modem are identified as a group and at least one of the channels in said group is available for use by a first user or group and also by least one further user or group of users

Preferably each of the channels is shared or available for use by at least one other user and/or group.

In accordance with the method of the invention there is provided high peak to average data rates to individual users and/or the ability to maximise network capacity by providing hybrid multicast and unicast services

This invention spreads the group over which Time Division Multiplexed (TDM) data partitioning can be performed by skewing the bonded channels across spectrally adjacent users and therefore a further step of the method is to identify the spectral locations of each of the users.

In one embodiment the method includes the step of allocating each of the users to a specified group of users.

As a result of the invention, although the number of users sharing any specific channel remains the same, a greater number of users share the capacity of the group of bonded channels. This allows greater flexibility in partitioning the data between the users.

In a further aspect of the invention there is provided a method for controlling the usage of a bonded channel modem, said modem allowing the provision of a plurality of data channels to a plurality of users or groups of users for selection of said channels, wherein each of the channels is allocated to a group, said groups being groups of spectrally adjacent channels and access to the channels within that group of channels is allocated in a skewed manner to a particular user or group of users.

Typically at least one of the users within said group of users will have access to at least one channel in a further group of channels. Preferably most or all of the users within said group of users will have access to at least one channel in a further group of channels.

Typically at least one of the channels in the group can be shared with users, with the number of users in the group allocated to the same number of channels in accordance with the invention being greater than the number that could have been allocated conventionally.

Thus in the present invention, rather than allocating a group of channels to a group of users, each of which has the same access to each of the channels in the group, the access which each user in the group has to each of the channels in the channel group differs. This results in the number of users in the group being increased with respect to the conventional allocation method.

In a further aspect of the invention there is provided a system for use with wideband channel bonding modems in which a group of spectrally adjacent channels is identified and only partially shared with other users or groups of users and wherein the aggregated data from these bonded channels is time division multiplexed amongst the users of that group of channels.

Typically the partial sharing increases the number of clients which can influence the time division multiplexing of the aggregated data and this provides greater flexibility in managing resource contention.

A specific embodiment of the invention will now be described with reference to the accompanying drawings; wherein
Figure 1 illustrates a schematic representation of a conventional bonded channel modem allocation method; and
Figure 2 illustrates a schematic representation of a bonded channel modem allocation method in accordance with the invention.

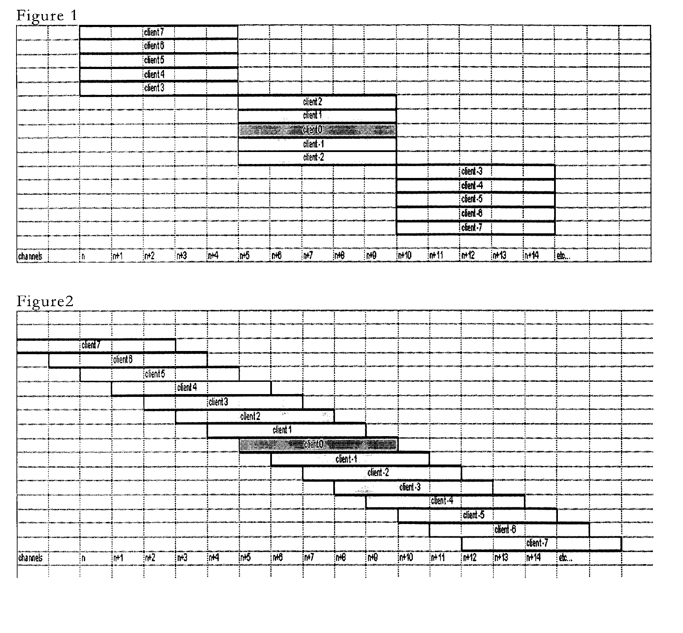

Both Figures 1 and 2 illustrate the use of wideband modem channel bonding over 5 adjacent RF channels of received digital data, typically received via a cable network system.

Referring first to Figure 1 there is illustrated a conventional channel allocation method. The bonded channel modem has a series of available channels n to n+14. and a series of 15 users from client 7 to client -7.

The conventional method is to allocate a group of channels, for example, channels n+5 to n+9 to a particular group of users, in this case client 2 to client -2. In this way each of the channels n+5 to n+9 is available and so the five channels were accessible by only these five clients. However this causes problems as previously described in the practical usage of the system when used with cable networks.

In accordance with the invention as illustrated in Figure 2 there is provided a new and inventive allocation method between eth channels and users. Using the same group of channels n+5 to n+9 as in Figure 1 for ease of reference, these channels are again identified as a bonded group of channels (channels n to n+4 would be another group, channel n+10 to channel n+14 would be a further group).

In accordance with the invention the users which can have access to this group of channels is allocated on a skewed or staggered basis such that the number of users with access to this group of channels is increased in comparison to Figure 1. In accordance with the invention the users, client 4 to client -4 all can access this bonded group of channels.

Although some of the users can only utilise some of the channels in the group, for example, client 3 can only use channels n+5 and n+6, it is found that the increase in the number of users which have an influence on the group of channels increases the number of users over which the time division multiplexed data can be spread.

For example, if one considers that the maximum burst data transfer rate to any one modem, given that all the modems have one QoS guaranteed service at 40% of one channel.

For the scheme illustrated in figure 1 the total bonded capacity is 5 channels for 5 users or group of users, which is equivalent to 500% of an RF channel. Of the 500%, at least 200% (5users x40%) is required for the QoS guaranteed services. This leaves 300% of the RF channel available for burst communications. If each RF channel can deliver a 40Mb/s payload then the maximum burst rate available is 120Mb/s.

For the scheme illustrated in figure 2 the total bonded capacity is 5 channels or 500% of an RF channel for any one modem. However in this case, because the distribution of channel groupings is staggered between users in the manner shown, every modem can "see" at least one or more RF channel outside the grouping of any other modem, hence only 40% of an RF channel needs to be reserved for QoS guaranteed services. This leaves 460% of an RF channel free for burst data communications. If each RF channel can deliver a 40Mb/s payload then the maximum burst rate is 184Mb/s (4.6 times 40Mb/s. This is over a 50% improvement on the maximum burst capacity of the scheme illustrated in figure 1.

As the amount of QoS guaranteed data increases, the difference in maximum burst data rate between the two schemes becomes more dramatic. At 80% of an RF channel per client for QoS guaranteed services the maximum burst rate under the method in figure 1 is 100% of an RF channel, whereas for the method illustrated in figure 2 the maximum burst rate is 420% of an RF channel. This is an improvement of some 320%, and therefore the invention provides large advantages over the conventional method for communications and spreads the group of channels over which Time Division Multiplexed (TDM) data partitioning can be performed by skewing the bonded channels across the spectrally adjacent users or groups of users.

## Claims

1. A method for processing and allocating received data, said received data transferred via a modem amongst an identifiable number of users connected to said modem, allocating portions of the available data transmission spectrum to respective users or groups of users and wherein, the modem is a bonded channel modem and spectrally adjacent data channels of the modem are identified as a group and at least one of the channels in said group is available for use by a first user or group and also by least one further user or group of users.

2. A method according to claim 1 wherein each of the channels in said group is available for use by at least one other user and/or group.

3. A method according to claim 1 wherein the method includes the step of providing hybrid multicast and unicast services.

4. A method according to claim 1 wherein the method includes a step of identifying the spectral locations of each user or group of users.

5. A method according to claim 4 wherein time division multiplex (TDM) data partitioning is performed by skewing the bonded channels across spectrally adjacent users.

6. A method according to claim 1 wherein the method includes the step of allocating each user to a specified group of users and then dealing with the groups of users in accordance with the method.

7. A method for controlling the usage of a bonded channel modem, said modem allowing the provision of a plurality of data channels to a plurality of users or groups of users for selection of said channels, wherein each of the channels is allocated to a group, said groups being groups of spectrally adjacent channels and access to the channels within that group of channels is allocated in a skewed manner to a particular user or group of users.

8. A method according to claim 7 wherein at least one of the users within said group of users can access at least one channel in a further group of channels.

9. Apparatus according to claim 8 wherein most or all of the users within said group of users will have access to at least one channel in a further group of channels.

10. A method according to claim 8 wherein at least one of the channels in the group of channels can be shared with more than one user.

11. A method according to claim 8 wherein the access which each user in a group of users has to each of the channels in a channel group differs between users.

12. A system for use with wide band channel bonding modems in which a group of spectrally adjacent channels available via the modem is identified and shared between users or groups of users and wherein aggregated data from the bonded channels is time division multiplexed amongst the users of that group of channels.

13. A system according to claim 12 wherein the partial sharing increases the number of users.

14. A system according to claim 12 wherein the capacity for the maximum burst data rate fro each channel is increased in comparison to that channel only being available for one user or group of users.
